# FASCICULE DE BREVET EUROPEEN

(11) **EP 3 729 772 B1**
(45) Date de publication et mention de la délivrance du brevet: **15.05.2024**
(21) Numéro de dépôt: 18833104.5
(22) Date de dépôt: 17.12.2018
(51) Int. Cl.: H04L 65/612, H04N 21/20, H04N 21/231

(54) **PROCÉDÉ DE DISTRIBUTION D'UN CONTENU DANS UN RÉSEAU DE DISTRIBUTION DE CONTENUS, ENTITÉ D'ORIGINE ET ENTITÉS DE DISTRIBUTION CORRESPONDANTES**
VERFAHREN ZUM VERTEILEN VON INHALT IN EINEM INHALTSVERTEILUNGSNETZWERK, URSPRUNGSEINHEIT UND ENTSPRECHENDE VERTEILUNGSEINHEITEN
METHOD FOR DISTRIBUTING CONTENT IN A CONTENT DISTRIBUTION NETWORK, ENTITY OF ORIGIN AND CORRESPONDING DISTRIBUTION ENTITIES

(30) Priorité: 20.12.2017 FR 1762631
(43) Date de publication de la demande: 28.10.2020
(73) Titulaire: Orange, 92130 Issy-les-Moulineaux (FR)
(72) Inventeur: GAUSSEN, Benoît, 92326 CHÂTILLON CEDEX (FR); FEUNTEUN, Glenn, 92326 CHÂTILLON CEDEX (FR)
(74) Mandataire: Vidon Brevets & Stratégie
(86) Numéro de dépôt international: PCT/FR2018/053330
(87) Numéro de publication internationale: WO 2019/122652

(56) Documents cités:
- US-A1- 2008 243 996
- US-A1- 2014 006 566

## Description

### 1. DOMAINE TECHNIQUE

Le domaine de l'invention est celui des réseaux de distribution de contenus (aussi appelés CDN pour « Content Delivery Network » en anglais, ou encore « réseau de diffusion de contenu »).

Plus précisément, l'invention concerne un procédé de distribution, par une entité de distribution comprise dans un réseau de distribution de contenus (CDN), d'un contenu mis à disposition par une entité d'origine.

### 2. ARRIÈRE-PLAN TECHNOLOGIQUE

Il est connu pour un opérateur d'utiliser les réseaux de distribution de contenus pour distribuer des contenus dans un réseau de communication. Généralement, ces réseaux comprennent des entités d'origine et des entités de distribution. Les entités d'origine mettent à disposition des contenus qui sont dupliqués, par exemple en fonction de leur popularité, sur les entités de distribution qui sont situées près des destinataires de ces contenus. Les entités de distribution permettent ainsi de ne pas solliciter les entités d'origine et de diminuer les coûts d'acheminement.

Les réseaux de distribution de contenus sont aujourd'hui utilisés pour délivrer plusieurs types de services à destination des utilisateurs finaux (aussi appelés internautes ou clients), notamment :
- livraison de contenus multimédias et audiovisuels, de tailles variables suivant les usages et protocoles utilisés (streaming, téléchargement) ;
- la livraison de ces contenus peut se faire en HTTP (« HyperText Transfer Protocol ») ou HTTPS (« HyperText Transfer Protocol Secure »), ce dernier protocole devenant de plus en plus répandu et exigé par les fournisseurs de contenus ;
- des fonctionnalités avancées peuvent être nécessaires pour rendre le service avec une valeur ajoutée : sécurisation, accélération, optimisation et adaptation des contenus, etc.

Les services (et les contenus associés) sont définis par les fournisseurs de contenus et mis en oeuvre, dans la mesure du possible, par les opérateurs des réseaux de distribution de contenus (appelés par la suite « opérateur CDN ») via l'application de configurations spécifiques pour chaque réseau de distribution de contenus. La mise en oeuvre d'un service est de fait limitée à un couple « fournisseur de contenu - opérateur CDN ». En d'autres termes, pour implémenter (mettre en oeuvre) une fonctionnalité d'un service défini par un fournisseur de contenus, chaque opérateur CDN doit appliquer, dans son réseau de distribution de contenus (et plus précisément dans les entités de distribution, aussi appelées « serveurs cache »), une configuration spécifique (c'est-à-dire différente d'un opérateur CDN à l'autre) et statique (elle est stockée dans chaque serveur cache) qui définit des paramètres d'utilisation de cette fonctionnalité.

La question de la scalabilité et de la couverture géographique des utilisateurs finaux (aussi appelés « entités clientes ») par un réseau de distribution de contenus se pose. Pour augmenter la couverture géographique de son réseau et son efficacité, l'opérateur CDN a aujourd'hui deux options :
1) déployer de nouveaux serveurs cache dans les zones géographiques non couvertes (cela peut impliquer de devoir déployer ces serveurs cache dans les réseaux des opérateurs Internet afin de rendre le réseau de distribution de contenus plus efficace ; c'est l'option retenue par de grands acteurs comme Akamai, Google ou Facebook) ;
2) interconnecter son réseau de distribution de contenus avec celui d'un opérateur de CDN tiers.

L'option 1) permet à l'opérateur CDN de garder la maîtrise sur les services qu'il délivre et sur les fonctionnalités offertes. Par contre, cela nécessite des déploiements massifs de serveurs cache, demandant de gros investissements et d'importants coûts d'opération et de maintenance (hébergement, bande passante réseau, énergie, mise à jour, remplacement de matériels).

L'option 2) permet de répartir les coûts et les revenus entre les opérateurs CDN impliqués. Mais la généralisation de l'interconnexion des réseaux de distribution de contenus se heurte à la diversité des technologies CDN utilisées par les opérateurs CDN. Une interconnexion entre deux réseaux de distribution de contenus n'est possible que si leurs couvertures fonctionnelles sont identiques. Et même si c'est le cas, la mise en oeuvre du service n'est pas aisée car elle nécessite la mise en place d'une configuration spécifique et statique (voir discussion plus haut) sur chacun des deux réseaux de distribution de contenus impliqués. Ce processus de configuration, qui n'est pas aisé, peut être manuel ou automatisé, par exemple via des interfaces de programmation applicative (ou API pour « Application Programming Interface »). Dans le cas où l'un des deux réseaux de distribution de contenus ne sait pas fournir une des fonctionnalités du service, l'interconnexion entre les deux réseaux de distribution de contenus est tout simplement impossible.

Il est connu de l'état de la technique, comme décrit dans la demande de brevet US2008/243996, de diffuser simultanément un contenu multimédia vers une pluralité d'entités clientes sur un premier réseau de communication, ce dernier comportant une mémoire cache partagée d'un serveur sur un deuxième réseau. Il est également connu, comme décrit dans la demande de brevet US2014/006566, d'utiliser un protocole de diffusion en temps réel (RTSP) pour transmettre un contenu multimédia sous forme de paquets RTP dans un réseau informatique.

En résumé, il n'est pas aisé pour un opérateur CDN d'interconnecter de façon dynamique son réseau de distribution de contenus à un autre réseau de distribution de contenus, pour étendre la couverture géographique d'un service.

La question de la couverture fonctionnelle d'un réseau de distribution de contenus se pose également. En effet, dans le cas où un réseau de distribution de contenus ne sait pas fournir une des fonctionnalités d'un service, l'opérateur CDN de ce réseau ne pourra pas être sollicité par le fournisseur de contenu pour la mise en oeuvre de ce service.

Un des buts de la présente invention est de remédier aux insuffisances/inconvénients de l'état de la technique discutés ci-dessus et/ou d'y apporter des améliorations.

### 3. RÉSUMÉ

L'invention est définie par les revendications indépendantes annexées. D'autres modes de réalisation détaillés sont définis dans les revendications dépendantes. Dans un mode de réalisation particulier de l'invention, il est proposé un procédé de distribution, par une première entité de distribution comprise dans un premier réseau de distribution de contenus, d'un contenu mis à disposition par une entité d'origine, le procédé comprenant les étapes suivantes mises en oeuvre par ladite première entité de distribution :
- réception d'une requête d'accès au contenu en provenance d'une entité cliente ;
- si la requête d'accès est une première requête d'accès reçue par la première entité de distribution pour ledit contenu :
   * action en tant que proxy : réémission de la requête d'accès auprès de l'entité d'origine ou auprès d'une deuxième entité de distribution comprise dans un deuxième réseau de distribution de contenus, réception en retour et retransmission à l'entité cliente d'une réponse comprenant le contenu, et stockage du contenu dans un cache ; et
   * transmission à l'entité d'origine ou à la deuxième entité de distribution d'une requête de contexte, puis réception en retour d'une réponse comprenant une description d'un contexte d'exécution de la requête d'accès, et stockage de ladite description; ladite description comprend un code de traitement de ladite requête ultérieure d'accès exécutée par la première entité de distribution dans l'étape d'utilisation, le code de traitement comprenant un code de statut de livraison permettant à la première entité de distribution dans ladite étape d'utilisation d'envoyer au moins une information de statut de livraison à une autre première entité et un descriptif d'une portée dudit contexte d'exécution permettant d'identifier ledit contexte d'exécution à partir de ladite requête d'accès ultérieure;
- si la requête d'accès n'est pas ladite première requête d'accès mais une requête ultérieure d'accès, utilisation de la description préalablement stockée en vue de réaliser une exécution de ladite requête ultérieure d'accès.

Ainsi, ce mode de réalisation particulier de l'invention repose sur une approche tout à fait nouvelle et inventive consistant en une implémentation dynamique, sur la première entité de distribution (serveur cache) du premier réseau de distribution de contenus (premier CDN), d'une description d'un contexte d'exécution d'une requête d'accès à un contenu. En effet, cette description est reçue et stockée par la première entité de distribution (suite à la réception de la première requête d'accès), qui pourra ainsi l'utiliser pour traiter (exécuter) une requête ultérieure pour le même contenu. Cette description décrit une ou plusieurs fonctionnalités (d'un service fourni par un fournisseur de contenu), ainsi qu'une configuration qui définit les paramètres d'utilisation de cette ou ces fonctionnalité(s).

La solution proposée permet donc l'implémentation dynamique, sur la première entité de distribution, d'une ou plusieurs fonctionnalités non disponibles de façon native sur le premier réseau de distribution de contenus.

Dans le cas où la description est fournie par l'entité d'origine, la solution proposée permet à l'opérateur CDN du premier réseau de distribution de contenus d'être sollicité par le fournisseur de contenu pour la mise en oeuvre d'un service, alors que la première entité de distribution de ce premier réseau ne dispose pas de manière native de la ou les fonctionnalités de ce service. De cette façon, cet opérateur CDN améliore la couverture fonctionnelle de son réseau de distribution de contenus. Ceci permet également d'éviter au fournisseur de déployer ses propres serveurs avec les coûts associés.

Dans le cas où la description est fournie par la deuxième entité de distribution, la solution proposée permet à l'opérateur CDN du deuxième réseau de distribution de contenus d'étendre sa couverture géographique en s'appuyant sur le premier réseau de distribution de contenus. En d'autres termes, ceci permet de pallier les limitations de la solution connue pour l'interconnexion de réseaux de distribution de contenus, liées aux divergences fonctionnelles entre réseaux (la solution proposée ne nécessite pas la mise en place d'une configuration spécifique et statique sur chacun des deux réseaux de distribution de contenus impliqués dans l'interconnexion).

Selon une caractéristique particulière, la description du contexte d'exécution de la requête d'accès comprend :
- un descriptif d'une portée dudit contexte d'exécution, permettant d'identifier ledit contexte d'exécution à partir de ladite requête d'accès ultérieure ; et
- un code de traitement de ladite requête ultérieure d'accès.

Selon une caractéristique particulière, la description du contexte d'exécution de la requête d'accès comprend en outre un code d'initialisation dudit contexte. Le procédé comprend en outre l'étape suivante, mise en oeuvre par la première entité de distribution, si la requête d'accès est ladite première requête d'accès : exécution dudit code d'initialisation, afin d'initialiser une configuration d'exécution de ladite requête ultérieure d'accès.

Selon une caractéristique particulière, ledit code de traitement comprend un code d'autorisation de requête, permettant à la première entité de distribution, dans ladite étape d'utilisation, de déterminer, à partir d'au moins un élément de ladite requête ultérieure d'accès, si ladite entité cliente est autorisée ou non à recevoir le contenu.

Selon une caractéristique particulière, ledit code de traitement comprend un code d'identification de contenu, permettant à la première entité de distribution, dans ladite étape d'utilisation, de calculer, à partir d'au moins un élément de ladite requête ultérieure d'accès, un identifiant unique de contenu avec lequel la première entité de distribution identifiera le contenu dans le cache.

Selon une caractéristique particulière, ledit code de traitement comprend un code de génération de contenu, permettant à la première entité de distribution, dans ladite étape d'utilisation, si le contenu n'est pas disponible et valide dans le cache, de générer ou aller chercher le contenu à partir d'au moins un élément de ladite requête ultérieure d'accès, et de stocker le contenu dans le cache.

Selon une caractéristique particulière, ledit code de traitement comprend un code de début de livraison, permettant à la première entité de distribution, dans ladite étape d'utilisation, d'envoyer au moins une information de début de livraison, vers une première autre entité, avant transmission du contenu à l'entité cliente.

Selon une caractéristique particulière, ledit code de traitement comprend un code de fin de livraison, permettant à la première entité de distribution, dans ladite étape d'utilisation, d'envoyer au moins une information de fin de livraison, vers ladite première autre entité ou une deuxième autre entité, après transmission du contenu à l'entité cliente.

Selon une caractéristique particulière, une exécution dudit code de traitement par la première entité de distribution, dans ladite étape d'utilisation, est effectuée sous au moins une condition de limitation d'accès audit contenu et/ou de limitation de consommation dudit contenu.

Dans un autre mode de réalisation de l'invention, il est proposé un procédé de distribution, par une première entité de distribution comprise dans un premier réseau de distribution de contenus, d'un contenu mis à disposition par une entité d'origine, le procédé comprenant les étapes suivantes mises en oeuvre par l'entité d'origine ou une deuxième entité de distribution comprise dans un deuxième réseau de distribution de contenus :
- réception d'une requête de contexte provenant de ladite première entité de distribution ; et
- envoi d'une réponse à ladite première entité de distribution, ladite réponse comprenant une description d'un contexte d'exécution d'une requête d'accès audit contenu en provenance d'une entité cliente.

Dans un autre mode de réalisation de l'invention, il est proposé une première entité de distribution, comprise dans un premier réseau de distribution de contenus et configurée pour une distribution d'un contenu mis à disposition par une entité d'origine, ladite première entité de distribution comprenant :
- des moyens de réception d'une requête d'accès au contenu en provenance d'une entité cliente ;
- des moyens, activés si la requête d'accès est une première requête d'accès reçue par la première entité de distribution pour ledit contenu, et configurés pour :
   * agir en tant que proxy en effectuant : une réémission de la requête d'accès auprès de l'entité d'origine ou auprès d'une deuxième entité de distribution comprise dans un deuxième réseau de distribution de contenus, une réception en retour et une retransmission à l'entité cliente d'une réponse comprenant le contenu, et un stockage du contenu dans un cache ; et
   * transmettre à l'entité d'origine ou à la deuxième entité de distribution une requête de contexte, puis recevoir en retour une réponse comprenant une description d'un contexte d'exécution de la requête d'accès, et stocker ladite description ;
- des moyens, activés si la requête d'accès n'est pas ladite première requête d'accès mais une requête ultérieure d'accès, et configurés pour utiliser la description préalablement stockée en vue de réaliser une exécution de ladite requête ultérieure d'accès.

Dans un autre mode de réalisation de l'invention, il est proposé une entité d'origine, comprise dans un deuxième réseau de distribution de contenus, et comprenant :
- des moyens de réception d'une requête de contexte provenant d'une première entité de distribution comprise dans un premier réseau de distribution de contenus et configurée pour une distribution d'un contenu mis à disposition par ladite entité d'origine ; et
- des moyens d'envoi d'une réponse à ladite première entité de distribution, ladite réponse comprenant une description d'un contexte d'exécution d'une requête d'accès audit contenu en provenance d'une entité cliente.

Dans un autre mode de réalisation de l'invention, il est proposé une deuxième entité de distribution, comprise dans un deuxième réseau de distribution de contenus, et comprenant :
- des moyens de réception d'une requête de contexte provenant d'une première entité de distribution comprise dans un premier réseau de distribution de contenus et configurée pour une distribution d'un contenu mis à disposition par une entité d'origine ; et
- des moyens d'envoi d'une réponse à ladite première entité de distribution, ladite réponse comprenant une description d'un contexte d'exécution d'une requête d'accès audit contenu en provenance d'une entité cliente.

Dans un autre mode de réalisation de l'invention, il est proposé un produit programme d'ordinateur qui comprend des instructions de code de programme pour la mise en oeuvre du procédé exécuté par la première entité de distribution (dans l'un quelconque de ses différents modes de réalisation), lorsque le programme est exécuté sur un ordinateur.

Dans un autre mode de réalisation de l'invention, il est proposé un produit programme d'ordinateur qui comprend des instructions de code de programme pour la mise en oeuvre du procédé exécuté par l'entité d'origine ou la deuxième entité de distribution (dans l'un quelconque de ses différents modes de réalisation), lorsque le programme est exécuté sur un ordinateur.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- les figures 1A et 1B présentent des organigrammes illustrant les procédés mis en oeuvre par une première entité de distribution (figure 1A) et une entité d'origine ou une deuxième entité de distribution (figure 1B), dans un mode de réalisation particulier de l'invention ;
- les figures 2 à 4 illustrent une première implémentation des procédés des figures 1A et 1B, dans laquelle la première entité de distribution interagit avec l'entité d'origine :
   ∘ la figure 2 détaillant le traitement d'une première requête d'accès ;
   ∘ la figure 3 détaillant le traitement d'une requête ultérieure d'accès, dans le cas où le contenu est en cache ;
   ∘ la figure 4 détaillant le traitement d'une requête ultérieure d'accès, dans le cas où le contenu n'est pas en cache ;

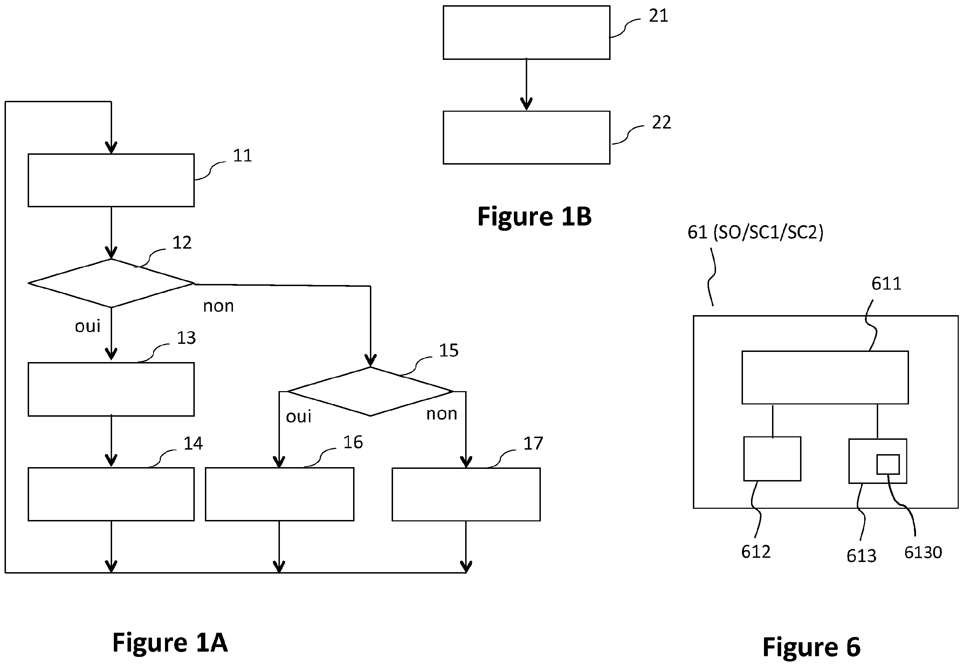

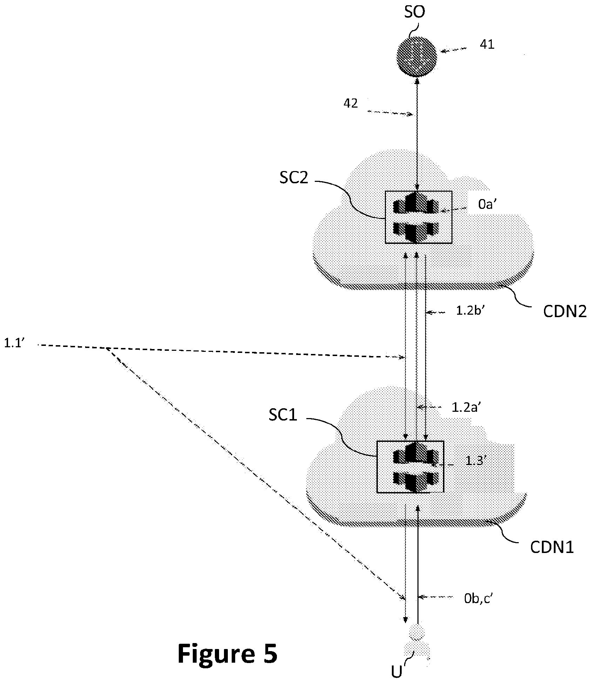

- la figure 5 détaille le traitement d'une première requête d'accès dans une deuxième implémentation des procédés des figures 1A et 1B, dans laquelle la première entité de distribution interagit avec la deuxième entité de distribution (et non pas avec l'entité d'origine) ; et
- la figure 6 présente la structure d'une entité, pouvant être une entité d'origine ou une entité de distribution (d'un premier ou second réseau de distribution de contenus), selon un mode de réalisation particulier de l'invention.

### 5. DESCRIPTION DÉTAILLÉE

Sur toutes les figures du présent document, les éléments et étapes identiques sont désignés par une même référence numérique.

On présente maintenant, en relation avec la **figure 1A****,** un procédé de distribution d'un contenu, mis en oeuvre par une première entité de distribution, dans un mode de réalisation particulier de l'invention.

On suppose que la première entité de distribution est comprise dans un premier réseau de distribution de contenus et que le contenu est mis à disposition par une entité d'origine.

Dans une étape 11, la première entité de distribution reçoit une requête d'accès au contenu en provenance d'une entité cliente.

Dans une première étape de test 12, la première entité détermine s'il s'agit d'une première requête d'accès reçue par la première entité de distribution pour ce contenu.

En cas de réponse positive à la première étape de test 12 (i.e. s'il s'agit d'une première requête d'accès), la première entité de distribution effectue les étapes 13 et 14 puis revient à l'étape 11 pour traiter une nouvelle requête d'accès.

Dans l'étape 13, la première entité de distribution agit en tant que proxy :
- elle réémet la requête d'accès auprès de l'entité d'origine ou auprès d'une deuxième entité de distribution comprise dans un deuxième réseau de distribution de contenus ;
- elle reçoit en retour une réponse comprenant le contenu ;
- elle retransmet cette réponse à l'entité cliente ; et
- elle stocke le contenu dans un cache.

Dans l'étape 14, la première entité de distribution transmet à l'entité d'origine ou à la deuxième entité de distribution une requête de contexte ; puis reçoit en retour une réponse comprenant une description d'un contexte d'exécution de la requête d'accès ; enfin elle stocke cette description.

En cas de réponse négative à la première étape de test 12 (i.e. s'il ne s'agit pas d'une première requête d'accès mais d'une requête ultérieure d'accès), la première entité de distribution effectue une deuxième étape de test 15 dans laquelle elle détermine si le contenu est disponible et valide dans son cache.

En cas de réponse positive à la deuxième étape de test 15 (i.e. si le contenu est disponible et valide dans son cache), la première entité de distribution effectue l'étape 16 puis revient à l'étape 11 pour traiter une nouvelle requête d'accès. Dans l'étape 16, la première entité de distribution utilise la description préalablement stockée (cf. étape 14) pour réaliser une exécution de la requête ultérieure d'accès (c'est-à-dire livrer le contenu à l'entité cliente).

En cas de réponse négative à la deuxième étape de test 15 (i.e. si le contenu n'est pas « disponible et valide » dans son cache), la première entité de distribution effectue l'étape 17 puis revient à l'étape 11 pour traiter une nouvelle requête d'accès. Dans l'étape 17, la première entité de distribution génère ou va chercher (auprès de l'entité d'origine ou auprès de la deuxième entité de distribution) le contenu à partir d'au moins un élément de la requête ultérieure d'accès.

Comme illustré sur la **figure 1B****,** le procédé mis en oeuvre par l'entité d'origine ou la deuxième entité de distribution (et donc complémentaire de celui décrit sur la figure 1A pour la première entité de distribution) comprend :
- une étape 21 de réception de la requête de contexte provenant de la première entité de distribution ; et
- une étape 22 d'envoi, à la première entité de distribution, de la réponse comprenant la description du contexte d'exécution d'une requête d'accès au contenu.

### Première implémentation

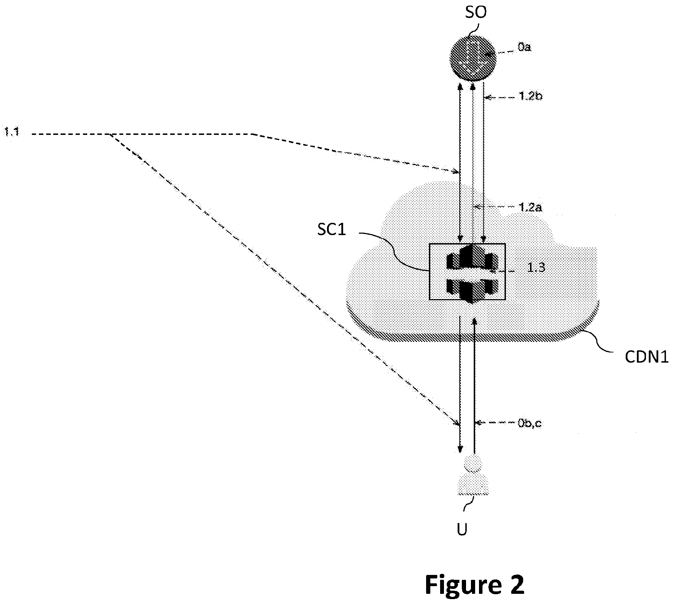

On présente maintenant, en relation avec les **figures 2 à 4****,** une première implémentation des procédés des figures 1A et 1B, dans laquelle la première entité de distribution SC1 (aussi appelée par la suite « premier serveur cache ») interagit avec l'entité d'origine SO (aussi appelée par la suite « serveur d'origine »). La première entité de distribution SC1 appartient, comme d'autres entités de distributions (autres serveurs cache), à un premier réseau de distribution de contenus référencé CDN1.

A titre d'exemple illustratif, et comme symbolisé par la flèche référencée 0a, on suppose qu'un fournisseur de contenus, proposant le site www.site.com, utilise le premier réseau de distribution de contenus CDN1 pour délivrer ses contenus. Il met en place le serveur d'origine SO, auquel les serveurs cache de ce premier réseau CDN1 (notamment le premier serveur cache SC1) vont s'adresser pour obtenir les ressources à délivrer. Le serveur d'origine SO stocke, pour chaque contenu (ou groupe de contenus), une description d'un contexte d'exécution des requêtes d'accès à ce(s) contenu(s).

On suppose également, comme symbolisé par la flèche référencée 0b,c, qu'une entité cliente U veut accéder à un contenu, qui est une ressource située sur le site www.site.com et dont l'adresse url est http(s)://www.site.com/ressource. A cet effet, l'entité cliente U transmet une requête d'accès au contenu souhaité. Cette requête d'accès est dirigée vers le premier serveur cache SC1, par un moyen bien connu de l'homme du métier et hors du périmètre de la présente solution.

La **figure 2** détaille le traitement, par le premier serveur cache SC1, de la requête d'accès transmise par l'entité cliente U dans le cas où il s'agit d'une première requête d'accès à ce contenu (cf. étapes 13 et 14 de la figure 1A). Dans ce cas, le contenu n'est pas en cache dans le premier serveur cache SC.

Dans une étape 1.1, pour éviter toute latence vis-à-vis de l'entité cliente U pour cette première requête d'accès à ce contenu (ressource), le premier serveur cache SC1 agit comme simple proxy (par exemple selon le protocole TCP ou HTTP) :
- il réémet la première requête d'accès de façon transparente auprès du serveur d'origine SO (la méthode de redirection de la première requête d'accès vers le serveur d'origine SO est hors du périmètre de la présente solution) ;
- il reçoit en retour une réponse comprenant le contenu ;
- il retransmet la réponse à l'entité cliente U, qui obtient ainsi la ressource demandée ; et
- il stocke le contenu dans un cache.

Dans une étape 1.2a, effectuée par exemple en même temps que l'étape 1.1, le premier serveur cache SC1 émet une requête de contexte vers le serveur d'origine SO afin d'obtenir une description d'un contexte d'exécution de la requête d'accès (cf. plus haut la discussion de la flèche référencée 0a) .

Dans une étape 1.2b, le premier serveur cache SC1 reçoit en réponse une description d'un contexte d'exécution de la requête d'accès, et stocke cette description.

Dans une mise en oeuvre particulière, cette description du contexte d'exécution comprend :
- un descriptif d'une portée du contexte d'exécution : il permet par la suite d'identifier le contexte d'exécution à partir d'une requête d'accès ultérieure. En effet, le même contexte d'exécution peut être appliqué à des requêtes d'accès différentes. On définit la portée du contexte par exemple en listant des URLs concernées (liste et/ou expressions régulières correspondant à plusieurs URLs) ainsi qu'en précisant une durée de vie du contexte (permettant de renouveler les URLs listées à l'expiration de cette durée de vie) ;
- un code d'initialisation du contexte : code dont l'exécution permet d'initialiser une configuration d'exécution d'une requête ultérieure d'accès. Dans le cas où une configuration globale au contexte, ou commune à plusieurs contextes, est nécessaire, le code d'initialisation permet de l'initialiser. Cela peut concerner une configuration liée au fournisseur de contenu (limites en terme de ressources utilisables, mise en place de certificats HTTPS, configuration de paramètres utilisés par les codes de traitement, etc.) ; et
- un code de traitement d'une requête ultérieure d'accès : code dont l'exécution permet le traitement de la requête dans les différentes phases de traitement. Il comprend lui-même plusieurs codes (aussi appelés sous-codes) :
   ∘ un code d'autorisation de requête : code permettant d'autoriser ou non le premier serveur cache SC1 à traiter une requête ultérieure d'accès. Une exécution ultérieure de ce code permet au premier serveur cache SC1, à partir d'au moins un élément d'une requête ultérieure d'accès (par exemple l'URL du contenu et l'adresse IP de l'entité cliente), de déterminer si l'entité cliente est autorisée ou non à recevoir le contenu ;
   ∘ un code d'identification de contenu : code permettant, à partir d'un ou plusieurs éléments de la première requête d'accès (URL du contenu, entêtes, adresse IP, etc.) de calculer un identifiant unique de contenu, avec lequel le premier serveur cache SC1 identifiera le contenu dans le cache ;
   ∘ un code de génération de contenu : code permettant, si le contenu n'est pas « disponible et valide » dans le cache, de le générer à partir d'un ou plusieurs éléments de la première requête d'accès (URL du contenu, entêtes, adresse IP, etc.). On peut envisager d'aller chercher le contenu sur le serveur d'origine SO, ou de générer un nouveau contenu plus adapté (par exemple avec une des techniques suivantes : transcodage d'images ou vidéos, transpackaging, adaptation de code HTML/javascript, etc.) ;
   ∘ un code de début de livraison : code exécuté au début de la livraison du contenu, par exemple pour permettre l'envoi d'une ou plusieurs informations de début de livraison vers au moins un premier équipement du fournisseur de contenu (par exemple l'envoi d'informations de suivi (informations de log, informations comptables, etc.) vers un serveur d'analyse), avant transmission du contenu à l'entité cliente U ;
   ∘ un code de fin de livraison : code exécuté à la fin de la livraison du contenu, par exemple pour permettre l'envoi d'une ou plusieurs informations de fin de livraison vers au moins un deuxième équipement du fournisseur de contenu (par exemple l'envoi d'informations sur le statut de la livraison (fin, erreurs, etc.) vers un serveur d'analyse (le même que celui déjà mentionné ou un autre), après transmission du contenu à l'entité cliente U. Ces informations de statut sont par exemple utilisées pour compter le nombre de sessions actives, pour un contenu et pour un utilisateur. Le nombre de sessions actives est par exemple utilisé comme paramètre d'entrée par le code d'autorisation de requête, qui le compare à une valeur seuil (nombre maximal de sessions actives) ;
   ∘ ... (on peut envisager d'autres types de codes pour d'autres phases de traitement non listées ici).

Les codes mentionnés ci-dessus peuvent se présenter sous plusieurs formes : scripts (python, php, etc.), byte-code (langages de programmation compilés indépendant de l'architecture d'exécution, ex: LUA), binaires (langages de programmation compilés dépendant de l'architecture, ex: C), etc.

Pour des raisons de performances et de sécurités, l'exécution de ces codes se fait, dans une mise en oeuvre particulière, dans des conditions où l'accès et la consommation de ressources (contenus) sont limités (c'est-à-dire sous au moins une condition de limitation d'accès au contenu et/ou de limitation de consommation du contenu) mais adaptables (suivant l'entité cliente, le fournisseur de contenus, un niveau de priorité, etc.).

On peut également envisager d'exécuter les codes dans des containers (docker, lxc, rocket, etc.), voire même que les codes soient directement fournis sous forme de containers exécutés avec des limitations de ressources.

Dans une étape 1.3, le premier serveur cache SC1 exécute le code d'initialisation (reçu à l'étape 1.2b). Cette exécution permet par exemple d'initialiser une configuration HTTPS, avec mise en place des certificats et des clés privées nécessaires à la gestion des requêtes HTTPS.

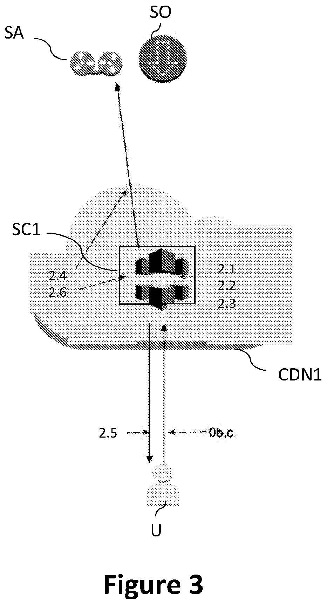

La **figure 3** détaille le traitement, par le premier serveur cache SC1, de la requête d'accès transmise par l'entité cliente U dans le cas où il s'agit d'une requête ultérieure d'accès et où le contenu est en cache (cf. étape 16 de la figure 1A).

Dans une étape 2.1, le premier serveur cache SC1 identifie le contexte d'exécution concerné (et donc également le code de traitement associé, c'est-à-dire compris dans la même description de contexte d'exécution, appelée ci-après « code de traitement sélectionné »), au vu de l'URL demandée et en utilisant le ou les descriptif(s) de portée de contexte d'exécution qu'il a préalablement reçu(s) et stocké(s). Pour mémoire, pour chaque première requête d'accès reçue et traitée conformément au procédé de la figure 2, le premier serveur cache SC1 a reçu et stocké une description d'un contexte d'exécution, comprenant notamment un descriptif d'une portée de ce contexte d'exécution (ce descriptif liste par exemple des URLs concernées).

Dans une étape 2.2, le premier serveur cache SC1 exécute le code d'autorisation de requête compris dans le code de traitement sélectionné. Si le résultat de cette exécution est que la requête d'accès n'est pas autorisée, le premier serveur cache SC1 stoppe le traitement, sinon il poursuit et passe à l'étape 2.3.

Dans l'étape 2.3, le premier serveur cache SC1 exécute le code d'identification de contenu compris dans le code de traitement sélectionné, puis, avec l'identifiant unique de contenu obtenu, détermine si le contenu recherché est en cache et valide. Dans le cas de la figure 3, on suppose que le contenu est effectivement en cache et valide, donc le premier serveur cache SC1 passe à l'étape 2.4.

Dans l'étape 2.4, le premier serveur cache SC1 exécute le code de début de livraison (par exemple pour envoyer des informations comptables vers un serveur d'analyse SA).

Dans une étape 2.5, le premier serveur cache SC1 délivre le contenu à l'entité cliente U.

Dans une étape 2.6, le premier serveur cache SC1 exécute le code de fin de livraison (par exemple pour envoyer des informations de statut de livraison vers le serveur d'analyse SA).

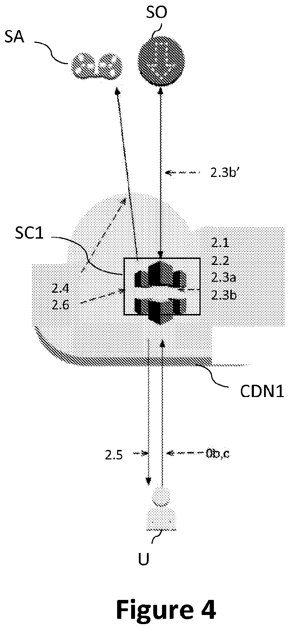

La **figure 4** détaille le traitement, par le premier serveur cache SC1, de la requête d'accès transmise par l'entité cliente U dans le cas où il s'agit d'une requête ultérieure d'accès et où le contenu n'est pas en cache (cf. étape 17 de la figure 1A).

Les étapes 2.1 et 2.2 sont identiques à celles déjà décrites pour la figure 3.

Dans l'étape 2.3a, comme dans l'étape 2.3 de la figure 3, le premier serveur cache SC1 exécute le code d'identification de contenu compris dans le code de traitement sélectionné, puis, avec l'identifiant unique de contenu obtenu, détermine si le contenu recherché est en cache et valide, donc le premier serveur cache SC1 passe à l'étape 2.3b.

Dans l'étape 2.3b, le premier serveur cache SC1 exécute le code de génération de contenu. Par exemple, dans une sous-étape 2.3b', il va chercher le contenu sur le serveur d'origine SO (envoi d'une requête et réception d'une réponse avec le contenu). Puis il stocke le contenu dans un cache.

Les étapes 2.4, 2.5 et 2.6 sont identiques à celles déjà décrites pour la figure 3.

### Deuxième implémentation

On présente maintenant, en relation avec la **figure 5****,** une deuxième implémentation des procédés des figures 1A et 1B, dans laquelle la première entité de distribution SC1 (aussi appelée par la suite « premier serveur cache ») interagit avec la deuxième entité de distribution SC2 (aussi appelée par la suite « deuxième serveur cache »), et non pas avec l'entité d'origine SO. La deuxième entité de distribution SC2 appartient, comme d'autres entités de distributions (autres serveurs cache), à un deuxième réseau de distribution de contenus référencé CDN2.

Plus précisément, la figure 5 détaille le traitement d'une première requête d'accès dans le cadre de cette deuxième implémentation.

A titre d'exemple illustratif, et comme symbolisé par la flèche référencée 41, on suppose qu'un fournisseur de contenus, proposant le site www.site.com, utilise le deuxième réseau de distribution de contenus CDN2 pour délivrer ses contenus. Il met en place le serveur d'origine SO, auquel les serveurs cache de ce deuxième réseau CDN2 (notamment le deuxième serveur cache SC2) vont s'adresser pour obtenir les ressources à délivrer (comme symbolisé par la flèche référencée 42).

On suppose également, comme symbolisé par la flèche référencée 0a', que le deuxième serveur cache SC2 stocke, pour chaque contenu (ou groupe de contenus), une description d'un contexte d'exécution des requêtes d'accès à ce(s) contenu(s). Dans cette deuxième implémentation, et contrairement à la première implémentation, le serveur d'origine SO ne stocke pas, pour chaque contenu (ou groupe de contenus), une description d'un contexte d'exécution des requêtes d'accès à ce(s) contenu(s).

On suppose enfin, comme symbolisé par la flèche référencée 0b,c', qu'une entité cliente U veut accéder à un contenu, qui est une ressource située sur le site www.site.com et dont l'adresse url est http(s)://www.site.com/ressource. A cet effet, l'entité cliente U transmet une requête d'accès au contenu souhaité. Cette requête d'accès est dirigée vers le premier serveur cache SC1 (du premier réseau de distribution de contenus CDN1), par un moyen bien connu de l'homme du métier et hors du périmètre de la présente solution.

Dans cette deuxième implémentation, le premier serveur cache SC1 effectue des étapes 1.1', 1.2a', 1.2b' et 1.3' qui se déduisent directement des étapes 1.1, 1.2a, 1.2b et 1.3 déjà décrites pour la figure 2, en considérant que le deuxième serveur cache SC2 de la figure 5 y joue le rôle du serveur d'origine SO dans la figure 2.

De même, dans la deuxième implémentation :
- le traitement, par le premier serveur cache SC1 d'une requête d'accès transmise par l'entité cliente U dans le cas où il s'agit d'une requête ultérieure d'accès et où le contenu est en cache et valide (dans le premier serveur cache SC1), peut être déduit directement des étapes 2.1 à 2.6 déjà décrites pour la figure 3, en considérant que le deuxième serveur cache SC2 y joue le rôle du serveur d'origine SO dans la figure 3 ;
- le traitement, par le premier serveur cache SC1 d'une requête d'accès transmise par l'entité cliente U dans le cas où il s'agit d'une requête ultérieure d'accès et où le contenu n'est pas « en cache et valide » (dans le premier serveur cache SC1), peut être déduit directement des étapes 2.1 à 2.6 déjà décrites pour la figure 4, en considérant que le deuxième serveur cache SC2 y joue le rôle du serveur d'origine SO dans la figure 4.

### Troisième implémentation

Dans une troisième implémentation, qui est une variante de la deuxième implémentation :
- le serveur d'origine SO et le deuxième serveur cache SC2 mettent en oeuvre la solution de la première implémentation (voir les figures 2 à 4), en jouant respectivement le rôle du serveur d'origine SO et du premier serveur cache SC1 de la première implémentation. En conséquence (puisqu'il s'agit d'une des caractéristiques de la première implémentation), c'est le serveur d'origine SO qui stocke initialement, pour chaque contenu (ou groupe de contenus), une description d'un contexte d'exécution des requêtes d'accès à ce(s) contenu(s) ; et le deuxième serveur cache SC2 (puisqu'il joue le rôle du premier serveur cache SC1 de la première implémentation) va ensuite émettre une requête de contexte vers le serveur d'origine SO afin d'obtenir une description d'un contexte d'exécution de la requête d'accès (cf. plus haut la discussion de la flèche référencée 0a de la figure 2) ; et
- le deuxième serveur cache SC2 et le premier serveur cache SC1 mettent en oeuvre la solution de la deuxième implémentation (voir la figure 5).

### Autres implémentations

D'autres implémentations peuvent être envisagées en mettant en cascade plus de deux réseaux de distribution de contenus. En notant CDN₁ à CDNₙ les n réseaux de distribution de contenus en cascade, et SC₁ à SCₙ les serveurs cache correspondants, avec n > 2, on a un système dans lequel :
- le serveur d'origine SO et le n^{ième} serveur cache SCₙ mettent en oeuvre la solution de la première implémentation (voir les figures 2 à 4), en jouant respectivement le rôle du serveur d'origine SO et du premier serveur cache SC1 de la première implémentation ; et
- chaque couple de serveurs cache (SCₖ, SCₖ₋₁), avec *k* ∈ {n - 1 ... 2}, met en oeuvre la solution de la deuxième implémentation (voir la figure 5).

La **figure 6** présente la structure d'une entité 61, pouvant être l'entité d'origine (serveur d'origine) SO, la première entité de distribution (premier serveur cache) SC1 ou la deuxième entité de distribution (deuxième serveur cache) SC2, selon un mode de réalisation particulier de l'invention.

Cette entité comprend une mémoire vive 612 (par exemple une mémoire RAM), une unité de traitement 611, équipée par exemple d'un processeur, et pilotée par un programme d'ordinateur stocké dans une mémoire morte 613 (par exemple une mémoire ROM ou un disque dur). A l'initialisation, les instructions de code du programme d'ordinateur sont par exemple chargées dans la mémoire vive 612 avant d'être exécutées par le processeur de l'unité de traitement 611.

Cette figure 6 illustre seulement une manière particulière, parmi plusieurs possibles, de réaliser les différents algorithmes détaillés ci-dessus, en relation avec les figures 1A, 1B et 2 à 5. En effet, la technique de l'invention se réalise indifféremment :
- sur une machine de calcul reprogrammable (un ordinateur PC, un processeur DSP ou un microcontrôleur) exécutant un programme comprenant une séquence d'instructions, ou
- sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé de distribution, par une première entité de distribution (SC1) comprise dans un premier réseau de distribution de contenus (CDN1), d'un contenu mis à disposition par une entité d'origine (SO), le procédé comprenant les étapes suivantes mises en oeuvre par ladite première entité de distribution (SC1) :
- réception (11) d'une requête d'accès au contenu en provenance d'une entité cliente (U) ;
- si la requête d'accès est une première requête d'accès reçue par la première entité de distribution pour ledit contenu :
* action en tant que proxy (13) : réémission de la première requête d'accès auprès de l'entité d'origine ou auprès d'une deuxième entité de distribution (SC2) comprise dans un deuxième réseau de distribution de contenus (CDN2), réception en retour et retransmission à l'entité cliente d'une réponse comprenant le contenu, et stockage du contenu dans un cache ; et
* transmission (14) à l'entité d'origine ou à la deuxième entité de distribution d'une requête de contexte constituant une demande pour une description d'un contexte d'exécution d'une requête ultérieure d'accès audit contenu, puis réception (14) en retour d'une réponse comprenant ladite description, et stockage de ladite description ;
- si la requête d'accès n'est pas ladite première requête d'accès mais une requête ultérieure d'accès, utilisation (16, 17) de la description préalablement stockée, en vue de réaliser une exécution de ladite requête ultérieure d'accès pour fournir le contenu préalablement stocké dans le cache,
**caractérisé en ce que** ladite description comprend :
- un code de traitement de ladite requête ultérieure d'accès exécutée par la première entité de distribution dans l'étape d'utilisation, le code de traitement comprenant un code de statut de livraison permettant à la première entité de distribution dans ladite étape d'utilisation d'envoyer au moins une information de statut de livraison à une autre première entité ; et
- un descriptif d'une portée dudit contexte d'exécution permettant d'identifier ledit contexte d'exécution à partir de ladite requête d'accès ultérieure.

2. Procédé de distribution selon la revendication 1, dans lequel la description du contexte d'exécution de la requête d'accès comprend en outre un code d'initialisation dudit contexte, et dans lequel le procédé comprend en outre l'étape suivante, mise en oeuvre par la première entité de distribution, si la requête d'accès est ladite première requête d'accès :
* exécution dudit code d'initialisation, afin d'initialiser une configuration d'exécution de ladite requête ultérieure d'accès.

3. Procédé de distribution selon l'une quelconque des revendications 1 et 2, dans lequel ledit code de traitement comprend un code d'autorisation de requête, permettant à la première entité de distribution, dans ladite étape d'utilisation, de déterminer, à partir d'au moins un élément de ladite requête ultérieure d'accès, si ladite entité cliente est autorisée ou non à recevoir le contenu.

4. Procédé de distribution selon l'une quelconque des revendications 1 à 3, dans lequel ledit code de traitement comprend un code d'identification de contenu, permettant à la première entité de distribution, dans ladite étape d'utilisation, de calculer, à partir d'au moins un élément de ladite requête ultérieure d'accès, un identifiant unique de contenu avec lequel la première entité de distribution identifiera le contenu dans le cache.

5. Procédé de distribution selon l'une quelconque des revendications 1 à 4, dans lequel ledit code de traitement comprend un code de génération de contenu, permettant à la première entité de distribution, dans ladite étape d'utilisation, si le contenu n'est pas disponible et valide dans le cache, de générer ou aller chercher le contenu à partir d'au moins un élément de ladite requête ultérieure d'accès, et de stocker le contenu dans le cache.

6. Procédé de distribution selon l'une quelconque des revendications 1 à 5, dans lequel ledit code de statut de livraison est un code de début de livraison,, ladite au moins une information de statut de livraison correspond à au moins une information de début de livraison envoyée vers ladite première autre entité avant transmission du contenu à l'entité cliente.

7. Procédé de distribution selon l'une quelconque des revendications 1 à 6, dans lequel ledit code de statut de livraison est un code de fin de livraison et ladite au moins une information de statut correspond au moins une information de fin de livraison envoyée vers ladite première autre entité ou une deuxième autre entité après transmission du contenu à l'entité cliente.

8. Procédé de distribution selon l'une quelconque des revendications 1 à 7, dans lequel une exécution dudit code de traitement par la première entité de distribution, dans ladite étape d'utilisation, est effectuée sous au moins une condition de limitation d'accès audit contenu et/ou de limitation de consommation dudit contenu.

9. Procédé de distribution, par une première entité de distribution (SC1) comprise dans un premier réseau de distribution de contenus (CDN1), d'un contenu mis à disposition par une entité d'origine (SO), le procédé comprenant les étapes suivantes mises en oeuvre par l'entité d'origine ou une deuxième entité de distribution (SC2) comprise dans un deuxième réseau de distribution de contenus (CDN2) :
- réception (21) d'une requête de contexte provenant de ladite première entité de distribution et constituant une demande pour une description d'un contexte d'exécution d'une requête ultérieure d'accès audit contenu en provenance d'une entité cliente (U); et
- envoi (22) d'une réponse à ladite première entité de distribution, ladite réponse comprenant ladite description ;
**caractérisé en ce que** ladite description comprend :
- un code de traitement de ladite requête ultérieure d'accès, le code de traitement comprenant un code de statut de livraison permettant à la première entité de distribution d'envoyer au moins une information de statut de livraison à une autre première entité
- un descriptif d'une portée dudit contexte d'exécution permettant d'identifier ledit contexte d'exécution à partir de ladite requête d'accès ultérieure.

10. Première entité de distribution (SC1), comprise dans un premier réseau de distribution de contenus (CDN1) et configurée pour une distribution d'un contenu mis à disposition par une entité d'origine (SO), ladite première entité de distribution (SC1) comprenant :
- des moyens de réception d'une requête d'accès au contenu en provenance d'une entité cliente (U) ;
- des moyens, activés si la requête d'accès est une première requête d'accès reçue par la première entité de distribution pour ledit contenu, et configurés pour :
* agir en tant que proxy en effectuant : une réémission de la première requête d'accès auprès de l'entité d'origine ou auprès d'une deuxième entité de distribution (SC2) comprise dans un deuxième réseau de distribution de contenus (CDN2), une réception en retour et une retransmission à l'entité cliente d'une réponse comprenant le contenu, et un stockage du contenu dans un cache ; et
* transmettre (14) à l'entité d'origine ou à la deuxième entité de distribution une requête de contexte constituant une demande pour une description d'un contexte d'exécution d'une requête ultérieure d'accès audit contenu, puis recevoir (14) en retour une réponse comprenant ladite description, et stocker ladite description ;
- des moyens, activés si la requête d'accès n'est pas ladite première requête d'accès mais une requête ultérieure d'accès, et configurés pour utiliser (16, 17) la description préalablement stockée, en vue de réaliser une exécution de ladite requête ultérieure d'accès pour fournir le contenu préalablement stocké dans le cache
**caractérisée en ce que** ladite description comprend :
- un code de traitement de ladite requête ultérieure d'accès exécuté par les moyens d'utilisation, le code de traitement comprenant un code de statut de livraison permettant à la première entité de distribution dans ladite étape d'utilisation d'envoyer au moins une information de statut de livraison à une autre première entité ; et
- un descriptif d'une portée dudit contexte d'exécution permettant d'identifier ledit contexte d'exécution à partir de ladite requête d'accès ultérieure.

11. Entité d'origine (SO), comprise dans un deuxième réseau de distribution de contenus (CDN2), et comprenant :
- des moyens de réception d'une requête de contexte provenant d'une première entité de distribution (SC1) comprise dans un premier réseau de distribution de contenus (CDN1) et configurée pour une distribution d'un contenu mis à disposition par ladite entité d'origine (SO), ladite requête de contexte constituant une demande pour une description d'un contexte d'exécution d'une requête ultérieure d'accès audit contenu en provenance d'une entité cliente (U) ; et
- des moyens d'envoi d'une réponse à ladite première entité de distribution, ladite réponse comprenant ladite description ;
**caractérisée en ce que** ladite description comprend :
- un code de traitement de ladite requête ultérieure d'accès, le code de traitement comprenant un code de statut de livraison permettant à la première entité de distribution d'envoyer au moins une information de statut de livraison à une autre première entité ; et
- un descriptif d'une portée dudit contexte d'exécution permettant d'identifier ledit contexte d'exécution à partir de ladite requête d'accès ultérieure.

12. Deuxième entité de distribution (SC2), comprise dans un deuxième réseau de distribution de contenus (CDN2), et comprenant :
- des moyens de réception d'une requête de contexte provenant d'une première entité de distribution (SC1) comprise dans un premier réseau de distribution de contenus (CDN1) et configurée pour une distribution d'un contenu mis à disposition par une entité d'origine (SO), ladite requête de contexte constituant une demande pour une description d'un contexte d'exécution d'une requête ultérieure d'accès audit contenu en provenance d'une entité cliente (U) ; et
- des moyens d'envoi d'une réponse à ladite première entité de distribution, ladite réponse comprenant ladite description ;
**caractérisée en ce que** ladite description comprend :
- un code de traitement de ladite requête ultérieure d'accès, le code de traitement comprenant un code de statut de livraison permettant à la première entité de distribution d'envoyer au moins une information de statut de livraison à une autre première entité ; et
- un descriptif d'une portée dudit contexte d'exécution permettant d'identifier ledit contexte d'exécution à partir de ladite requête d'accès ultérieure.

13. Produit programme d'ordinateur, comprenant des instructions de code de programme, lorsque les instructions sont exécutées par au moins un dispositif informatique, fait exécuter par ledit dispositif informatique les étapes du procédé de l'une quelconque des revendications 1 à 8.

14. Produit programme d'ordinateur, comprenant des instructions de code de programme, lorsque les instructions sont exécutées par au moins un dispositif informatique, fait exécuter par ledit dispositif informatique les étapes du procédé de la revendication 9.

## Patentansprüche

1. Verfahren zur Verteilung, durch eine in einem ersten Inhaltsverteilungsnetzwerk (CDN1) enthaltene erste Verteilungsentität (SC1), eines von einer Ursprungsentität (SO) zur Verfügung gestellten Inhalts, wobei das Verfahren die folgenden von der ersten Verteilungsentität (SC1) durchgeführten Schritte umfasst:
- Empfangen (11) einer von einer Kundenentität (U) kommenden Zugangsanforderung zum Inhalt;
- wenn die Zugangsanforderung eine erste von der ersten Verteilungsentität für den Inhalt empfangene Zugangsanforderung ist:
* Aktion als Proxy (13) : Wiederaussenden der ersten Zugangsanforderung bei der Ursprungsentität oder bei einer zweiten Verteilungsentität (SC2), die in einem zweiten Inhaltsverteilungsnetzwerk (CDN2) enthalten ist, wiederum Empfangen und Weiterleiten an die Kundenentität einer den Inhalt enthaltenden Antwort und Speichern des Inhalts in einem Cache; und
* Übertragung (14) an die Ursprungsentität oder an die zweite Verteilungsentität einer Kontextanforderung, die eine Anfrage für eine Beschreibung eines Ausführungskontexts einer späteren Zugangsanforderung zum Inhalt bildet, dann Empfangen (14) einer die Beschreibung enthaltenden Antwort und Speichern der Beschreibung;
- wenn die Zugangsanforderung nicht die erste Zugangsanforderung, sondern eine spätere Zugangsanforderung ist, Verwendung (16, 17) der vorher gespeicherten Beschreibung, um eine Ausführung der späteren Zugangsanforderung zu realisieren, um den vorher im Cache gespeicherten Inhalt zu liefern,
**dadurch gekennzeichnet, dass** die Beschreibung enthält:
- einen Verarbeitungscode der späteren Zugangsanforderung, die von der ersten Verteilungsentität im Verwendungsschritt ausgeführt wird, wobei der Verarbeitungscode einen Lieferstatuscode enthält, der es der ersten Verteilungsentität im Verwendungsschritt ermöglicht, mindestens eine Lieferstatusinformation an eine andere erste Entität zu senden; und
- ein Deskriptiv einer Reichweite des Ausführungskontexts, das es ermöglicht, den Ausführungskontext ausgehend von der späteren Zugangsanforderung zu identifizieren.

2. Verteilungsverfahren nach Anspruch 1, wobei die Beschreibung des Ausführungskontexts der Zugangsanforderung außerdem einen Initialisierungscode des Kontexts enthält, und wobei das Verfahren außerdem den folgenden Schritt enthält, der von der ersten Verteilungsentität durchgeführt wird, wenn die Zugangsanforderung die erste Zugangsanforderung ist:
* Ausführung des Initialisierungscodes, um eine Ausführungskonfiguration der späteren Zugangsanforderung zu initialisieren.

3. Verteilungsverfahren nach einem der Ansprüche 1 und 2, wobei der Verarbeitungscode einen Anforderungsberechtigungscode enthält, der es der ersten Verteilungsentität im Verwendungsschritt ermöglicht, ausgehend von mindestens einem Element der späteren Zugangsanforderung zu bestimmen, ob die Kundenentität berechtigt ist oder nicht, den Inhalt zu empfangen.

4. Verteilungsverfahren nach einem der Ansprüche 1 bis 3, wobei der Verarbeitungscode einen Inhaltsidentifizierungscode enthält, der es der ersten Verteilungsentität im Verwendungsschritt ermöglicht, ausgehend von mindestens einem Element der späteren Zugangsanforderung, eine eindeutige Inhaltskennung zu berechnen, mit der die erste Verteilungsentität den Inhalt im Cache identifiziert.

5. Verteilungsverfahren nach einem der Ansprüche 1 bis 4, wobei der Verarbeitungscode einen Inhaltsgenerierungscode enthält, der es der ersten Verteilungsentität im Verwendungsschritt ermöglicht, wenn der Inhalt im Cache nicht verfügbar und gültig ist, den Inhalt zu generieren oder ausgehend von mindestens einem Element der späteren Zugangsanforderung zu suchen, und den Inhalt im Cache zu speichern.

6. Verteilungsverfahren nach einem der Ansprüche 1 bis 5, wobei der Lieferstatuscode ein Lieferbeginncode ist, wobei die mindestens eine Lieferstatusinformation mindestens einer Lieferbeginninformation entspricht, die an die erste andere Entität vor der Übertragung des Inhalts an die Kundenentität gesendet wird.

7. Verteilungsverfahren nach einem der Ansprüche 1 bis 6, wobei der Lieferstatuscode ein Lieferendecode ist, und die mindestens eine Statusinformation mindestens einer Lieferendeinformation entspricht, die an die erste andere Entität oder eine zweite andere Entität nach Übertragung des Inhalts an die Kundenentität gesendet wird.

8. Verteilungsverfahren nach einem der Ansprüche 1 bis 7, wobei eine Ausführung des Verarbeitungscodes durch die erste Verteilungsentität im Verwendungsschritt unter mindestens einer Bedingung der Zugangsbegrenzung zum Inhalt und/oder der Verbrauchsbegrenzung des Inhalts ausgeführt wird.

9. Verteilungsverfahren, durch eine in einem ersten Inhaltsverteilungsnetzwerk (CDN1) enthaltene erste Verteilungsentität (SC1), eines von einer Ursprungsentität (SO) zur Verfügung gestellten Inhalts, wobei das Verfahren die von der Ursprungsentität oder einer in einem zweiten Inhaltsverteilungsnetzwerk (CDN2) enthaltenen zweiten Verteilungsentität (SC2) durchgeführten Schritte umfasst:
- Empfangen (21) einer Kontextanforderung, die von der ersten Verteilungsentität kommt und eine Anfrage für eine Beschreibung eines Ausführungskontexts einer späteren Zugangsanforderung zum Inhalt bildet, die von einer Kundenentität (U) kommt; und
- Senden (22) einer Antwort an die erste Verteilungsentität, wobei die Antwort die Beschreibung enthält;
**dadurch gekennzeichnet, dass** die Beschreibung enthält:
- einen Verarbeitungscode der späteren Zugangsanforderung, wobei der Verarbeitungscode einen Lieferstatuscode enthält, der es der ersten Verteilungsentität ermöglicht, mindestens eine Lieferstatusinformation an eine andere erste Entität zu senden,
- ein Deskriptiv einer Reichweite des Ausführungskontexts, das es ermöglicht, den Ausführungskontext ausgehend von der späteren Zugangsanforderung zu identifizieren.

10. Erste Verteilungsentität (SC1), die in einem ersten Inhaltsverteilungsnetzwerk (CDN1) enthalten und für eine Verteilung eines Inhalts konfiguriert ist, der von einer Ursprungsentität (SO) zur Verfügung gestellt wird, wobei die erste Verteilungsentität (SC1) enthält:
- Mittel zum Empfangen einer Zugangsanforderung zum Inhalt von einer Kundenentität (U);
- Mittel, die aktiviert sind, wenn die Zugangsanforderung eine erste von der ersten Verteilungsentität für den Inhalt empfangene Zugangsanforderung ist, und konfiguriert sind:
* als Proxy zu wirken, indem sie ausführen: Wiederaussenden der ersten Zugangsanforderung bei der Ursprungsentität oder bei einer zweiten Verteilungsentität (SC2), die in einem zweiten Inhaltsverteilungsnetzwerk (CDN2) enthalten ist, wiederum Empfangen und Weiterleiten an die Kundenentität einer den Inhalt enthaltenden Antwort und eine Speicherung des Inhalts in einem Cache; und
* an die Ursprungsentität oder an die zweite Verteilungsentität eine Kontextanforderung zu übertragen (14), die eine Anfrage für eine Beschreibung eines Ausführungskontexts einer späteren Zugangsanforderung zum Inhalt bildet, dann eine die Beschreibung enthaltende Antwort empfangen (14) und die Beschreibung zu speichern;
- Mittel, die aktiviert sind, wenn die Zugangsanforderung nicht die erste Zugangsanforderung sondern eine spätere Zugangsanforderung ist, und konfiguriert sind, die vorher gespeicherte Beschreibung zu verwenden (16, 17), um eine Ausführung der späteren Zugangsanforderung zu realisieren, um den vorher im Cache gespeicherten Inhalt zu liefern;
**dadurch gekennzeichnet, dass** die Beschreibung enthält:
- einen Verarbeitungscode der späteren Zugangsanforderung, der von den Verwendungseinrichtungen ausgeführt wird, wobei der Verarbeitungscode einen Lieferstatuscode enthält, der es der ersten Verteilungsentität im Verwendungsschritt ermöglicht, mindestens eine Lieferstatusinformation an eine andere erste Entität zu senden; und
- ein Deskriptiv einer Reichweite des Ausführungskontexts, das es ermöglicht, den Ausführungskontext ausgehend von der späteren Zugangsanforderung zu identifizieren.

11. Ursprungsentität (SO), die in einem zweiten Inhaltsverteilungsnetzwerk (CDN2) enthalten ist und enthält:
- Mittel zum Empfangen einer Kontextanforderung, die von einer ersten Verteilungsentität (SC1) kommt, die in einem ersten Inhaltsverteilungsnetzwerk (CDN1) enthalten und für eine Verteilung eines Inhalts konfiguriert ist, der von der Ursprungsentität (SO) zur Verfügung gestellt wird, wobei die Kontextanforderung eine Anfrage für eine Beschreibung eines Ausführungskontexts einer späteren Zugangsanforderung zum Inhalt bildet, die von einer Kundenentität (U) kommt; und
- Mittel zum Senden einer Antwort an die erste Verteilungsentität, wobei die Antwort die Beschreibung enthält;
**dadurch gekennzeichnet, dass** die Beschreibung enthält:
- einen Verarbeitungscode der späteren Zugangsanforderung, wobei der Verarbeitungscode einen Lieferstatuscode enthält, der es der ersten Verteilungsentität ermöglicht, mindestens eine Lieferstatusinformation an eine andere erste Entität zu senden; und
- ein Deskriptiv einer Reichweite des Ausführungskontexts, das es ermöglicht, den Ausführungskontext ausgehend von der späteren Zugangsanforderung zu identifizieren.

12. Zweite Verteilungsentität (SC2), die in einem zweiten Inhaltsverteilungsnetzwerk (CDN2) enthalten ist und enthält:
- Mittel zum Empfangen einer von einer ersten Verteilungsentität (SC1) kommenden Kontextanforderung, die in einem ersten Inhaltsverteilungsnetzwerk (CDN1) enthalten und für eine Verteilung eines von einer Ursprungsentität (SO) zur Verfügung gestellten Inhalts konfiguriert ist, wobei die Kontextanforderung eine Anfrage für eine Beschreibung eines Ausführungskontexts einer späteren Zugangsanforderung zum Inhalt bildet, die von einer Kundenentität (U) kommt; und
- Einrichtungen zum Senden einer Antwort an die erste Verteilungsentität, wobei die Antwort die Beschreibung enthält;
**dadurch gekennzeichnet, dass** die Beschreibung enthält:
- einen Verarbeitungscode der späteren Zugangsanforderung, wobei der Verarbeitungscode einen Lieferstatuscode enthält, der es der ersten Verteilungsentität ermöglicht, mindestens eine Lieferstatusinformation an eine andere erste Entität zu senden; und
- ein Deskriptiv einer Reichweite des Ausführungskontexts, das es ermöglicht, den Ausführungskontext ausgehend von der späteren Zugangsanforderung zu identifizieren.

13. Computerprogrammprodukt, das Programmcodeanweisungen enthält, wenn die Anweisungen von mindestens einer EDV-Vorrichtung ausgeführt werden, von der EDV-Vorrichtung die Schritte des Verfahrens nach einem der Ansprüche 1 bis 8 ausführen lässt.

14. Computerprogrammprodukt, das Programmcodeanweisungen enthält, wenn die Anweisungen von mindestens einer EDV-Vorrichtung ausgeführt werden, von der EDV-Vorrichtung die Schritte des Verfahrens nach Anspruch 9 ausführen lässt.

## Claims

1. Method for distribution, by a first distribution entity (SC1) contained in a first content distribution network (CDN1), of a content item made available by a source entity (SO), the method comprising the following steps which are implemented by said first distribution entity (SC1):
- receiving (11) a request for access to the content item originating from a client entity (U);
- if the access request is a first access request received by the first distribution entity for said content item:
* acting as a proxy (13): retransmitting the first access request to the source entity or to a second distribution entity (SC2) contained in a second content distribution network (CDN2), receiving in return, and retransmitting to the client entity, a response comprising the content item, and storing the content item in a cache; and
* transmitting (14), to the source entity or to the second distribution entity, a context request constituting a request for a description of a context of execution of a subsequent request for access to said content item, then receiving (14) in return a response comprising said description, and storing said description;
- if the access request is not said first access request but a subsequent access request, using (16, 17) the description stored beforehand, with a view to executing said subsequent access request in order to provide the content item stored beforehand in the cache,
**characterized in that** said description comprises:
- a code for processing said subsequent access request executed by the first distribution entity in the use step, the processing code comprising a delivery status code making it possible for the first distribution entity in said use step to send at least one delivery status information item to another first entity; and
- a description of a scope of said execution context making it possible to identify said execution context on the basis of said subsequent access request.

2. Distribution method according to Claim 1, wherein the description of the context of execution of the access request further comprises a code for initializing said context, and wherein the method further comprises the following step, implemented by the first distribution entity, if the access request is said first access request:
* executing said initialization code, in order to initialize a configuration for executing said subsequent access request.

3. Distribution method according to either one of Claims 1 and 2, wherein said processing code comprises a request authorization code, making it possible for the first distribution entity, in said use step, to determine, on the basis of at least one element of said subsequent access request, whether or not said client entity is authorized to receive the content item.

4. Distribution method according to any one of Claims 1 to 3, wherein said processing code comprises a content identification code, making it possible for the first distribution entity, in said use step, to compute, on the basis of at least one element of said subsequent access request, a unique content identifier with which the first distribution entity will identify the content item in the cache.

5. Distribution method according to any one of Claims 1 to 4, wherein said processing code comprises a content generation code, making it possible for the first distribution entity, in said use step, if the content item is not available and valid in the cache, to generate or search for the content item on the basis of at least one element of said subsequent access request, and to store the content item in the cache.

6. Distribution method according to any one of Claims 1 to 5, wherein said delivery status code is a start-of-delivery code, said at least one delivery status information item corresponding to at least one start-of-delivery information item sent to said first other entity before the content item is transmitted to the client entity.

7. Distribution method according to any one of Claims 1 to 6, wherein said delivery status code is an end-of-delivery code and said at least one status information item corresponds to at least one end-of-delivery information item sent to said first other entity or a second other entity after the content item is transmitted to the client entity.

8. Distribution method according to any one of Claims 1 to 7, wherein said processing code is executed by the first distribution entity, in said use step, under at least one condition of access to said content item being limited and/or of consumption of said content item being limited.

9. Method for distribution, by a first distribution entity (SC1) contained in a first content distribution network (CDN1), of a content item made available by a source entity (SO), the method comprising the following steps which are implemented by the source entity or a second distribution entity (SC2) contained in a second content distribution network (CDN2):
- receiving (21) a context request originating from said first distribution entity and constituting a request for a description of a context of execution of a subsequent request for access to said content item originating from a client entity (U); and
- sending (22) a response to said first distribution entity, said response comprising said description;
**characterized in that** said description comprises:
- a code for processing said subsequent access request, the processing code comprising a delivery status code making it possible for the first distribution entity to send at least one delivery status information item to another first entity
- a description of a scope of said execution context making it possible to identify said execution context on the basis of said subsequent access request.

10. First distribution entity (SC1), contained in a first content distribution network (CDN1) and configured to distribute a content item made available by a source entity (SO), said first distribution entity (SC1) comprising:
- means for receiving a request for access to the content item originating from a client entity (U);
- means, activated if the access request is a first access request received by the first distribution entity for said content item, and configured to:
* act as a proxy by: retransmitting the first access request to the source entity or to a second distribution entity (SC2) contained in a second content distribution network (CDN2), receiving in return, and retransmitting to the client entity, a response comprising the content item, and storing the content item in a cache; and
* transmit (14), to the source entity or to the second distribution entity, a context request constituting a request for a description of a context of execution of a subsequent request for access to said content item, then receive (14) in return a response comprising said description, and store said description;
- means, activated if the access request is not said first access request but a subsequent access request, and configured to use (16, 17) the description stored beforehand, with a view to executing said subsequent access request in order to provide the content item stored beforehand in the cache
**characterized in that** said description comprises:
- a code for processing said subsequent access request executed by the use means, the processing code comprising a delivery status code making it possible for the first distribution entity in said use step to send at least one delivery status information item to another first entity; and
- a description of a scope of said execution context making it possible to identify said execution context on the basis of said subsequent access request.

11. Source entity (SO), contained in a second content distribution network (CDN2), and comprising:
- means for receiving a context request originating from a first distribution entity (SC1) contained in a first content distribution network (CDN1) and configured to distribute a content item made available by said source entity (SO), said context request constituting a request for a description of a context of execution of a subsequent request for access to said content item originating from a client entity (U); and
- means for sending a response to said first distribution entity, said response comprising said description;
**characterized in that** said description comprises:
- a code for processing said subsequent access request, the processing code comprising a delivery status code making it possible for the first distribution entity to send at least one delivery status information item to another first entity; and
- a description of a scope of said execution context making it possible to identify said execution context on the basis of said subsequent access request.

12. Second distribution entity (SC2), contained in a second content distribution network (CDN2), and comprising:
- means for receiving a context request originating from a first distribution entity (SC1) contained in a first content distribution network (CDN1) and configured to distribute a content item made available by a source entity (SO), said context request constituting a request for a description of a context of execution of a subsequent request for access to said content item originating from a client entity (U); and
- means for sending a response to said first distribution entity, said response comprising said description; **characterized in that** said description comprises:
- a code for processing said subsequent access request, the processing code comprising a delivery status code making it possible for the first distribution entity to send at least one delivery status information item to another first entity; and
- a description of a scope of said execution context making it possible to identify said execution context on the basis of said subsequent access request.

13. Computer program product, comprising program code instructions, when the instructions are executed by at least one computing device, makes said computing device execute the steps of the method of any one of Claims 1 to 8.

14. Computer program product, comprising program code instructions, when the instructions are executed by at least one computing device, makes said computing device execute the steps of the method of Claim 9.
